Europäisches Patentamt

European Patent Office

Office européen des brevets

(11) Veröffentlichungsnummer: **0 283 732 B1**

(12) **EUROPÄISCHE PATENTSCHRIFT**

(45) Veröffentlichungstag der Patentschrift: 22.05.91

(51) Int. Cl.5: **C09J 7/00**, C08J 7/06, **B32B 15/08**

(21) Anmeldenummer: 88102524.1

(22) Anmeldetag: 20.02.88

(54) **Verfahren zur Herstellung einer vernetzbaren Ethylenpolymerisatklebefolie und Verwendung der Folie zu Herstellung von Verbundwerkstoffen.**

(30) Priorität: 24.02.87 DE 3705784

(43) Veröffentlichungstag der Anmeldung:
28.09.88 Patentblatt 88/39

(45) Bekanntmachung des Hinweises auf die
Patenterteilung:
22.05.91 Patentblatt 91/21

(84) Benannte Vertragsstaaten:
AT BE CH DE FR GB LI NL SE

(56) Entgegenhaltungen:
EP-A- 0 035 117
DE-A- 1 917 277
FR-A- 2 253 060

(73) Patentinhaber: BASF Aktiengesellschaft
Carl-Bosch-Strasse 38
W-6700 Ludwigshafen(DE)

(72) Erfinder: Herner, Martin, Dr.
Mandelring 38
W-6706 Wachenheim(DE)
Erfinder: Keller, Rudolf
Josef-Werner-Strasse 11
W-6903 Neckargemuend(DE)
Erfinder: Koehnlein, Ernst, Dr.
Ungsteiner Strasse 4
W-6700 Ludwigshafen(DE)

## Beschreibung

Die Erfindung betrifft ein Verfahren zur Herstellung einer vernetzbaren Ethylenpolymerisatklebefolie.

Bei derartigen Verfahren werden Ethylenpolymerisatfolien erhalten, die als Klebefolien für die Herstellung von Verbundwerkstoffen verwendet werden und die durch Erwärmen vernetzbar sind.

Verfahren zur Herstellung von vernetzbaren Ethylenpolymerisaten durch Mischen feinteiliger Ethylenpolymerisate mit flüssigem Peroxid sind bereits bekannt (vgl. DE-A-21 24 941, DE-A-22 20 147 und DE-A-27 31 420). Bei diesem bekannten Verfahren werden feinteilige Ethylenpolymerisate, z.B. Granulatkörner, mit flüssigem Peroxid oberflächlich behandelt, wobei das Peroxid in das Ethylenpolymerisatteilchen eindiffundiert. Diese vernetzbaren Ethylenpolymerisate lassen sich ohne Schwierigkeiten im Extruder z.B. zu kabelummantelungen verarbeiten.

Es ist auch bereits bekannt, carboxygruppenhaltige Ethylencopolymerisate als Klebefolien zur Herstellung von Verbundwerkstoffen, z.B. aus zwei Metallschichten, zu verwenden (vgl. DE-A-1 669 685, DE-A-2 606 389, DE-A-17 95 269 oder DE-A-26 06 389).

Nachteilig bei den bekannten Verfahren zum Einbringen von Peroxiden in kleinteilige Ethylenpolymerisate ist die Tatsache, daß es technisch schwierig ist, peroxidhaltige Ethylenpolymerisate zu Folien zu verarbeiten. Durch Extrusion peroxidhaltiger Ethylenpolymerisate treten vorzeitige Vernetzungen, die in Form von Stippen und Inhomogenitäten erscheinen, auf. Dabei sind Fehler in den Folien, die durch lokale Überhitzungen verursacht werden, praktisch unvermeidbar. Vernetzbare Folien als Klebefolien zur Herstellung von Verbundwerkstoffen sind aber erwünscht, weil durch Vernetzung der Folien die Schubsteifigkeit des Verbundwerkstoffes bei Temperaturen oberhalb des Kristallitschmelzpunktes des Ethylenpolymerisats erhöht wird.

Zur Vermeidung dieses Nachteils ist es auch bereits bekannt als Klebemittel Formmassen aus einem Ethylen-Acrylsäure-Acrylsäureester-Terpolymerisat, welche 0,05 bis 7,0 Gew.% eines organischen Peroxids enthalten, als Mittel zum Verkleben von zwei Schichten zu verwenden. Diese Formmassen werden durch Mischen des Ethylenterpolymerisat mit organischen Peroxid und Verarbeiten zu Klebefolien erhalten (vgl. DE-A-19 17 277).

Nachteilig bei diesem bekannten Verfahren sind die Schwierigkeiten, die zur Herstellung derartiger Folien führen. So müssen gemäß Stand der Technik die Folien durch Zusammenpressen der Komponenten hergestellt werden.

In der EP-A-35 117 werden Formkörper aus Kunststoff teilweise mit Peroxiden beschichtet. Das Verfahren hat die Aufgabe nicht vernetzte Oberflächen bereitzustellen welche mittels anderer Klebetechniken verbunden werden.

Aufgabe des vorliegenden Verfahrens war es, eine vollständig vernetzbare Ethylenpolymerisatklebefolie zu schaffen, welche zur Verklebung von Schichten geeignet ist, wobei die oben erwähnten Nachteile vermieden werden.

Diese Aufgabe wurde durch Verfahren gemäß Patentansprüchen 1 bis 3 gelöst.

Klebefolien aus carboxylgruppenhaltigen Ethylenpolymerisaten sind aus der oben zitierten Literatur so bekannt, daß sich weitere Erläuterungen erübrigen. Carboxylgruppenhaltige Ethylenpolymerisate sind dabei nicht nur die an sich bekannten und besonders bevorzugten Terpolymerisate aus Ethylen, Acrylsäure und Acrylsäure-$C_1$- bis $C_8$-alkylester sondern auch z.B. Pfropfcopolymerisate von ethylenisch ungesättigter Carbonsäure, wie Acrylsäure oder Carbonsäureanhydrid, wie Maleinsäurenahydrid, auf Ethylenhomo- oder copolymerisate (vgl. DE-A-26 06 389). Besonders bevorzugt sind aber die oben bezeichneten Ethylenterpolymerisate, welche 60 bis 80 Gewichsteile Ethylen, 0,5 bis 20 Gewichsteile einer ethylenisch ungesättigten Carbonsäure, insbesondere Acrylsäure und 0,5 bis 20 Gewichsteils eines $C_1$- bis $C_8$-alkylesters einer ethylenisch ungesättigten Carbonsäure, insbesondere Acrylsäurebutylester, einpolymerisiert enthalten sowie Pfropfcopolymerisate ungesättigter Carbonsäuren oder Maleinsäureanhydrid auf Polyethylen. Als Ethylenpolymerisat ist nicht nur das Polyethylen sondern auch ein Ethylen-$\alpha$-Olefincopolymerisat - das sog. LLDPE -geeignet.

Bei dem erfindungsgemäßen Verfahren zur Herstellung der Klebefolie werden die flüssigen Peroxide mit Hilfe und unter Verwendungen von Druckwerken beschichtet. Dieses Beschichtungsverfahren von Folien ist unter dem Namen Flexodruckverfahren bekannt. Das Flexodruckverfahren ist ein für Papier und Kunststoffolien eingesetztes Rollenrotations-Druckverfahren, bei dem flexible Druckvorlagen aus Gummi oder Kunststoff verwendet werden. Es wird bei Raumtemperatur bevorzugt zwischen 20 und 25° C, gedruckt. Die Druckwerke sind bevorzugt Druckwalzen.

Als Vernetzungsmittel wird ein bei Temperaturen von Raumtemperatur bis +45° C, bevorzugt 15 bis 30° C flüssiges organisches Peroxid eingesetzt. Derartige Peroxide sind bekannt, bevorzugte Peroxide sind Di-tert.-butylperoxid, 2,5-Dimethyl-2,5-bis(tertiärbutylperoxy)hexan und Ter.-butylcumylperoxid. Die Peroxide werden gleichmäßig auf die Folie aufgetragen, die Folie soll später über den ganzen Bereich annähernd die gleiche Peroxidkonzentration aufweisen. Im allgemeinen wird, je nach Dicke der Folie aufgetragen, die Peroxidkonzentration soll, bezogen auf das Gewicht der Folie, 0,3 bis 3,0 bevorzugt 0,5 bis 2,0 Gew.% betragen. Der Schmelzpunkt der Peroxide sollte bei Temperaturen gleich oder kleiner als +45° liegen.

Nach dem Auftragen des Peroxids läßt man dieses in das Folienmaterial eindiffundieren. Hierzu kann man die Folie aufwickeln und warten bis alles Peroxid eingewandert ist. Die Zeit ist sehr unterschiedlich und hängt vom Folienmaterial und der Temperatur ab. Im allgemeinen ist der Vorgang des Eindiffundierens in wenigen Minuten beendet.

Zur Herstellung des Verbundwerkstoffes wird die erhaltene vernetzbare Folie zwischen zwei Deckschichten gelegt und mit diesen nach üblichen Verfahren durch Druckwalzen unter der Einwirkung von Wärme und eines geringen Drucks verbunden. Die Deckschichten bestehen bevorzugt aus Metallfolien- oder blechen. Die Herstellung von Schichtstoffen unter Verwendung einer Klebeschlicht bzw. Klebefolie ist z.B. in den Druckschriften DE-A-19 17 277, DE-A-26 06 389 und DE-A-29 09 604 beschrieben. Bevorzugt sind die Verbundwerkstoffe dreischichtig bestehend aus Metallblech/carboxylhaltigem Ethylenpolymerisat/Metallblech.

Nach dem erfindungsgemäßen Verfahren werden Verbundwerkstoffe erhalten, die eine erhöhte Schubsteifigkeit des Verbunds bei Temperaturen oberhalb des Kristallitschmelzpunkts des Ethylenpolymers aufweisen. Damit wird die Formbeständigkeit der Verbunde beim Einbrennen des Lackes auf Kraftfahrzeuge sowie beim Verschweißen der Verbunde untereinander erzielt. Der Vorteil des erfindungsgemäßen Verfahrens ist insbesondere darin zu sehen, daß die Klebefolie, welche Peroxid enthält und somit vernetzbar ist, nicht durch einen aufwendigen und schwierig zu realisierenden Extrusionsschritt einer peroxidhaltigen Schmelze hergestellt werden muß.

**Ansprüche**

1. Verfahren zur Herstellung einer vollständig vernetzbaren Ethylenpolymerisatklebefolie, dadurch gekennzeichnet, daß man auf eine Folie aus carboxylgruppenhaltigem Ethylenpolymerisat bei Temperaturen von Raumtemperatur bis +45° C ein flüssiges organisches Peroxid in Mengen von 0,3 bis 3,0 Gew.%, bezogen auf das Gewicht der Folie unter Verwendung von Druckwerken gleichmäßig aufträgt so daß die Folie später über den ganzen Bereich annähernd die gleiche Peroxidkonzentration aufweist und anschließend das Peroxid in die Folie eindiffundieren läßt.

2. Verfahren nach Anspruch 1, dadurch gekennzeichnet, daß das carboxylgruppenhaltige Ethylenpolymerisat eine Ethylen-Acrylsäure-Acrylsäure-$C_1$- bis $C_8$-alkylester-Terpolymerisat ist.

3. Verfahren nach Anspruch 2, dadurch gekennzeichnet, daß das carboxylgruppenhaltige Ethylenpolymerisat eine Propfpolymerisat von Ethylenpolymerisat mit carboxylgruppenhaltigen Monomeren ist.

4. Verwendung der vernetzbaren Ethylenpolymerisatfolie nach Anspruch 1 zur Herstellung eines Verbundwerkstoffes durch Zwischenlegen der Klebefolie zwischen zwei Deckschichten und Erwärmen unter Einwirkung eines geringen Drucks.

5. Verwendung der vernetzbaren Ethylenpolymerisatfolie nach Anspruch 1 zur Herstellung eines dreischichtigen Verbundwerkstoffes bestehend aus Metallblech/carboxylgruppenhaltigem Ethylenpolymerisat/Metallblech durch Zwischenlegen der Klebefolie zwischen zwei Metallbleche und Erwärmen unter Einwirkung eines geringen Drucks.

**Claims**

1. A process for the production of a completely crosslinkable self-adhesive ethylene polymer film, wherein a liquid organic peroxide is applied uniformly at from room temperature to +45° C in an amount of from 0.3 to 3.0% by weight, based on the weight of the film, with the use of pressure units, to a film of carboxyl-containing ethylene polymer, in such a way that the film subsequently has almost the same peroxide concentration over the entire area, and the peroxide is then allowed to diffuse into the film.

2. A process as claimed in claim 1, wherein the carboxyl-containing ethylene polymer is an ethylene/acrylic acid/$C_1$-$C_8$-alkyl acrylate terpolymer.

3. A process as claimed in claim 2, wherein the carboxyl-containing ethylene polymer is a graft polymer of an ethylene polymer with carboxyl-containing monomers.

4. Use of a crosslinkable ethylene polymer film as claimed in claim 1 for the production of a laminate by placing the self-adhesive film between two cover sheets and heating under the action of a slight pressure.

5. Use of a crosslinkable ethylene polymer film as claimed in claim 1 for the production of a three-layer laminate consisting of metal sheet/carboxyl-containing ethylene polymer/metal sheet by placing the self-adhesive film between two metal sheets and heating under the action of a slight pressure.

**Revendications**

1. Procédé de fabrication d'une feuille adhésive à base de polymère d'éthylène complètement réticulable, caractérise en ce qu'on applique uniformément, sur une feuille de polymère d'éthylène contenant des groupements carboxyle, avec utilisation de machines d'impression et à une température allant de la température ambiante jusqu'à +45°C, un peroxyde organique liquide dans des proportions de 0,3 à 3,0% en poids par rapport au poids de la feuille, de telle sorte qu'ultérieurement, la feuille présente approximativement la même concentration de peroxyde sur toute sa surface, et on laisse ensuite le peroxyde diffuser dans la feuille.

2. Procédé selon la revendication 1, caractérisé en ce que le polymère d'éthylène contenant des groupements carboxyle est un terpolymère éthylène/acide acrylique/acrylate d'alkyle en $C_1$-$C_8$.

3. Procédé selon la revendication 2, caractérisé en ce que le polymère d'éthylène contenant des groupements carboxyle est un polymère d'éthylène greffé avec des monomères contenant des groupements carboxyle.

4. Utilisation de la feuille de polymère d'éthylène réticulable selon la revendication 1 pour la fabrication d'un matériau composite par interposition de la feuille adhésive entre deux couches de recouvrement et par chauffage sous l'action d'une faible pression.

5. Utilisation de la feuille de polymère d'éthylène réticulable selon la revendication 1 pour la fabrication d'un matériau composite à trois couches composé de tôle métallique/polymère d'éthylène contenant des groupements carboxyle/tôle métallique, par interposition de la feuille adhésive entre deux tôles métalliques et par chauffage sous l'action d'une faible pression.